# EUROPEAN PATENT APPLICATION

(11) **EP 4 838 696 A1**
(43) Date of publication of application: **11.11.2026**
(21) Application number: 26176681.0
(22) Date of filing: 05.05.2026
(51) Int. Cl.: H01Q 1/42, H01Q 1/34, H01Q 5/35, H01Q 5/40, H01Q 7/00, H01Q 9/18, H01Q 9/28

(54) **AN INTEGRATED ANTENNA HEAD UNIT (IAHU) FOR USE IN UNDERWATER MOBILE PLATFORMS**

(30) Priority: 09.05.2025 IN 202541044880
(71) Applicant: Astra Microwave Products Limited, Hyderabad, Telangana 500084 (IN)
(72) Inventor: BARAD, Debaprasad, 500005 Telangana (IN); SEEDRALA, Tanmayi, 500005 Telangana (IN); THOTA, Rajesh, 500005 Telangana (IN); MOLUPOJU, Balachary, 500005 Telangana (IN)
(74) Representative: Potter Clarkson

(57) **Abstract**

The present invention relates to an Integrated Antenna Head Unit (IAHU) designed for enhancing communication and navigation capabilities in underwater mobile platforms, such as submarines. The IAHU consolidates multiple antenna systems into a single, compact unit, supporting a wide range of frequencies including Very Low Frequency (VLF), High Frequency (HF), Very High Frequency (VHF), Ultra High Frequency (UHF),L-band, and S-band. It facilitates tactical communication, satellite communication, and navigation through GPS, GLONASS, IRNSS and GSAT-7. The unit features a novel antenna-in-antenna layout and is enclosed within a composite radome, ensuring electrical transparency and structural integrity. Additional functionalities include an Automatic Identification System (AIS) receiver for vessel traffic monitoring and a Global Marine Distress and Safety System (GMDSS) for emergency communication. The IAHU's compact design minimizes the physical footprint and weight, while its efficient integration into existing submarine platforms enhances operational efficiency and reliability. This invention addresses the challenges of space, weight, and interference, providing a robust solution for modern underwater communication and navigation needs.

## Description

### FIELD OF THE INVENTION

The present invention relates to the field of electronics and communication engineering, specifically to radio frequency, microwave, and antenna engineering. More particularly, it pertains to an Integrated Antenna Head Unit (IAHU) designed for use in underwater mobile platforms, such as submarines, to facilitate tactical communication, satellite communication, and navigation.

### Application of the Invention:

The invention is applied in the context of underwater mobile platforms, providing a comprehensive solution for communication and navigation needs. The Integrated Antenna Head Unit (IAHU) designed to support multiple communication systems, including Very Low Frequency (VLF), High Frequency (HF), Very High Frequency (VHF), Ultra High Frequency (UHF), and L-band for tactical communication. It also supports satellite communication at the S-band for mobile satellite services, including both transmission and reception for GSAT-7. Additionally, the IAHU facilitates navigation through global navigation satellite systems such as GPS, GLONASS, and IRNSS.

The invention is particularly beneficial for submarines, where minimizing the physical footprint of communication and navigation systems is crucial without compromising performance. The IAHU's novel packaging and antenna-in-antenna layout ensure efficient use of space and resources, while the composite radome provides necessary protection from hydrostatic pressure and electrical transparency. The system also includes features for monitoring vessel traffic through an Automatic Identification System (AIS) receiver and ensuring safety at sea with a Global Marine Distress and Safety System (GMDSS).

### BACKGROUND OF THE INVENTION

In the realm of underwater mobile platforms, such as submarines, effective communication and navigation are critical for operational success. Traditionally, these platforms have relied on multiple discrete systems to handle various communication frequencies and navigation tasks. This approach often results in increased complexity, larger physical footprints, and potential interference between systems, which can compromise performance and reliability.

### Prior Art Problem:

Existing solutions typically involve separate antenna systems for different communication and navigation functions, such as tactical communication, satellite communication and navigation. These systems are often bulky, leading to increased space requirements and weight, which are significant concerns for submarines. Additionally, the use of multiple antennas can result in intra-band interference, reducing the efficiency and effectiveness of communication and navigation.

### Disadvantages of the Prior Art:

1. **Space and Weight Constraints:** The need for multiple antennas and systems increases the physical footprint and weight, which are critical limitations in submarine design.
2. **Interference Issues:** The proximity of different antennas can lead to intra-band interference, degrading signal quality and system performance.
3. **Complexity and Maintenance:** Multiple discrete systems increase the complexity of installation, operation and maintenance, leading to higher costs and potential reliability issues.

### Technical Solution of the Present Invention:

The present invention provides an Integrated Antenna Head Unit (IAHU) that consolidates multiple communication and navigation systems into a single, compact unit. The IAHU includes a loop antenna, a hybrid biconical antenna, a GPS and S-band antennas, all enclosed within a composite radome. This design minimizes the physical footprint and weight while ensuring optimal performance across various frequency bands. The antenna-in-antenna layout and strategic cable routing further reduce interference and simplify system integration.

### Technical Effect:

The integrated design of the IAHU allows for seamless operation across multiple communication and navigation systems, enhancing the overall efficiency and reliability of the platform. The composite radome ensures electrical transparency and structural integrity, protecting the antennas from environmental factors while maintaining performance.

### Technical Advancement of the Present Invention:

The invention represents a significant advancement over prior art by providing a single, integrated solution that addresses the challenges of space, weight, and interference. The novel packaging and layout of the antennas enable efficient use of space and resources, while the composite radome offers enhanced protection and performance.

### Need of the Present Invention:

The need for the present invention arises from the increasing demand for more efficient and reliable communication and navigation systems in underwater mobile platforms. As submarines and other underwater vehicles become more advanced, the ability to integrate multiple systems into a single, compact unit becomes essential. The present invention meets this need by offering a comprehensive solution that reduces complexity, minimizes interference, and enhances overall performance, making it an invaluable asset for modern underwater operations.

### OBJECT OF THE INVENTION

The primary object of the present invention is to develop an Integrated Antenna Head Unit (IAHU) for platform on-board electronics systems, specifically designed for underwater mobile platforms such as submarines. This invention aims to achieve the following objectives:
1. **Consolidation of Communication and Navigation Systems:** To integrate multiple antenna subsystems for Tactical Communication (TACOM), Satellite Communication (SATCOM), and navigation systems (GPS, GLONASS, IRNSS, GSAT-7) into a single, compact unit, thereby reducing the physical footprint and weight on the submarine.
2. **Minimization of Interference:** To design an antenna-in-antenna layout and strategic cable routing that minimizes intra-band interference, ensuring optimal performance across Very Low Frequency (VLF), High Frequency (HF), Very High Frequency (VHF), Ultra High Frequency (UHF), L-band, and S-band frequencies.
3. **Enhanced Structural and Electrical Performance:** To incorporate a composite radome that provides electrical transparency and structural integrity, protecting the antennas from environmental factors while maintaining performance under submarine conditions.
4. **Support for Safety and Monitoring Systems:** To integrate additional functionalities such as an Automatic Identification System (AIS) receiver for vessel traffic monitoring and a Global Marine Distress and Safety System (GMDSS) for emergency communication at sea.
5. **Simplification of System Integration:** To provide a solution that can be easily integrated into existing submarine platforms without requiring significant modifications, thereby reducing complexity and maintenance requirements.
6. **Improvement of Communication and Navigation Efficiency:** To enhance the overall efficiency and reliability of communication and navigation systems in underwater mobile platforms, ensuring seamless operation across multiple systems and frequency bands.

By achieving these objectives, the invention addresses the critical needs of modern underwater operations, providing a robust and efficient solution for communication and navigation challenges.

### SUMMARY OF THE INVENTION

The following disclosure presents a simplified summary of the invention in order to provide a basic understanding of some aspects of the invention. This summary is not an extensive overview of the present invention. It is not intended to identify the key/critical elements of the invention or to delineate the scope of the invention. Its sole purpose is to present some concept of the invention in a simplified form as a prelude to a more detailed description of the invention presented later.

The present invention pertains to an Integrated Antenna Head Unit (IAHU) specifically designed for submarine communication and navigation systems. This innovative unit consolidates multiple antenna systems into a single, compact structure, facilitating efficient communication and navigation for underwater mobile platforms. The IAHU supports a wide range of frequencies and systems, including tactical communication, satellite communication, and global navigation satellite systems, all while minimizing the physical footprint and enhancing performance.

### Aspects of the Invention:

1. **Integrated Antenna Systems:** The IAHU incorporates a loop antenna, a hybrid biconical antenna, and a GPS and S-band antennas, each tailored to operate across various frequency bands such as VLF, HF, VHF, UHF, L-band, and S-band.
2. **Composite Radome Design:** The unit is enclosed within a composite radome, which ensures both electrical transparency and structural integrity, protecting the antennas from harsh submarine/sea environments.
3. **Antenna-in-Antenna Layout:** The IAHU features a novel layout that integrates multiple antennas within a single structure, reducing intra-band interference and simplifying cable routing.
4. **Support for Safety and Monitoring Systems:** The unit includes capabilities for vessel traffic monitoring through an Automatic Identification System (AIS) receiver and emergency communication via a Global Marine Distress and Safety System (GMDSS).
5. **Compact and Efficient Design:** The IAHU is engineered to minimize space and weight, making it ideal for integration into existing submarine platforms without extensive modifications.

### Implementation of the Invention:

1. **Design and Fabrication:** The IAHU is meticulously designed, simulated to optimize space and performance, utilizing advanced materials for the composite radome and precision engineering for the antenna components.
2. **Integration with Submarine Systems:** The unit is seamlessly integrated into the submarine's onboard electronics, interfacing with tactical communication, satellite communication, and navigation modules.
3. **Optimization of Antenna Performance:** Each antenna within the IAHU is individually optimized to ensure minimal interference and maximum efficiency across its designated frequency bands.
4. **Testing and Validation:** The IAHU undergoes comprehensive testing to validate its performance under various operational conditions, ensuring reliability and effectiveness in real-world scenarios.
5. **Deployment and Operation:** Once validated, the IAHU is deployed on submarines, providing robust communication and navigation capabilities, with additional functionalities for monitoring vessel traffic and facilitating emergency communication.

By implementing the IAHU in this manner, the invention significantly enhances the communication and navigation capabilities of underwater mobile platforms, offering a streamlined and efficient solution to the challenges faced in submarine operations.

Thus is accordance with one aspect of the present invention there provided an Integrated Antenna Head Unit (IAHU) for a platform onboard electronics system, comprising:
a. A baseplate providing structural support for the antenna assembly;
b. A loop antenna mounted on a first spacer, configured to operate at Very Low Frequency (VLF), High Frequency (HF) and Very High Frequency (VHF) for tactical communication;
c. A hybrid biconical antenna assembly, including a cylindrical support and a second spacer, configured to support VHF, L-band, and Ultra High Frequency (UHF) communication;
d. A GPS and S-band antenna mounted on a third spacer, configured to support satellite communication and navigation systems including GPS, GLONASS, and IRNSS;
e. A composite radome enclosing the antenna assembly, designed to ensure electrical transparency and structural integrity under submarine conditions;
wherein the antennas are packaged in a manner that minimizes the submarine footprint while avoiding intra-band interference, and the cable routing for the SATCOM and navigation antennas simplified by an antenna-in-antenna layout.

In accordance with another aspect of the present invention there is provided a submarine communication and navigation system, comprising:
a. An Integrated Antenna Head Unit (IAHU) as claimed in claim 1, configured to facilitate communication and navigation for an underwater mobile platform;
b. A tactical communication module operatively connected to the IAHU, configured to transmit and receive signals across Very Low Frequency (VLF), High Frequency (HF), Very High Frequency (VHF), Ultra High Frequency (UHF), and L-band frequencies;
c. A satellite communication module operatively connected to the IAHU, configured to transmit and receive signals for S-band mobile satellite services, including both transmission (TX) and reception (RX) for GSAT-7;
d. A navigation module operatively connected to the IAHU, configured to receive signals from global navigation satellite systems, including GPS, GLONASS, and IRNSS, across L1, L2, and L5 bands;
e. An Automatic Identification System (AIS) receiver operatively connected to the IAHU, configured to monitor vessel traffic;
f. A Global Marine Distress and Safety System (GMDSS) operatively connected to the IAHU, configured to facilitate emergency signal communication at sea;
wherein the IAHU is enclosed within a composite radome designed to ensure electrical transparency and structural integrity, and the system is configured to minimize the submarine footprint while maintaining optimal performance across all communication and navigation functions.

In accordance with a further aspect of the present invention there is provided a method for facilitating communication and navigation for an underwater mobile platform, comprising:
a. Providing an Integrated Antenna Head Unit (IAHU) as described in claim 1, configured to support multiple communication and navigation systems;
b. Transmitting and receiving tactical communication signals using the loop antenna (3) and hybrid biconical antenna assembly, across Very Low Frequency (VLF), High Frequency (HF), Very High Frequency (VHF), Ultra High Frequency (UHF), and L-band frequencies;
c. Transmitting and receiving satellite communication signals using the GPS and S-band antenna (7), for S-band mobile satellite services, including both transmission (Tx) and reception (Rx) for GSAT-7;
d. Receiving navigation signals from global navigation satellite systems, including GPS, GLONASS, and IRNSS, across L1, L2, and L5 bands, using the GPS and S-band antenna (7);
e. Monitoring vessel traffic using an Automatic Identification System (AIS) receiver integrated within the IAHU;
f. Facilitating emergency signal communication at sea using a Global Marine Distress and Safety System (GMDSS) integrated within the IAHU;
wherein the method includes minimizing the submarine footprint while maintaining optimal performance across all communication and navigation functions, and ensuring electrical transparency and structural integrity of the IAHU through the use of a composite radome.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE ACCOMPANYING DRAWINGS

The accompanying figures illustrate various components of the wearable ultrasound hardware system design. These figures are provided to enhance the understanding of the invention and are not intended to limit its scope.

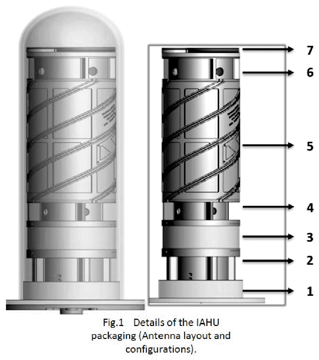

FIG. 1 illustrates a side view of the integrated antenna head unit (IAHU) for submarine communication and navigation systems. The drawing highlights the structural components and their arrangement within the unit, including:
   **1: Titanium Baseplate** - Provides the foundational support for the entire antenna assembly.
   **2: Spacer-I (Loop)** - Serves as the mounting support for the loop antenna.
   **3: Loop Antenna** - Configured to operate at Very Low Frequency (VLF), High Frequency (HF) and Very High Frequency (VHF) for tactical communication.
   **4: Spacer-II (Mounting Support for Biconical & Loop)** - Provides structural support and alignment for both the biconical and loop antennas.
   **5: Hybrid Biconical Antenna-** A Cylindrical Support is used to assemble the hybrid biconical antenna, which operates across VHF, L-band, and ultra high frequency (UHF) bands.
   **6: Spacer-III (GPS & Biconical Mounting Support)** - Ensures proper alignment and spacing for the GPS and S-band antenna.
   **7: GPS & S Band Antenna** - Facilitates satellite communication and navigation, supporting systems such as GPS, GLONASS, and IRNSS.

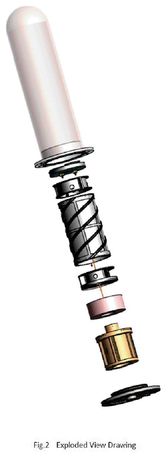

**FIG. 2****:** This figure provides an exploded view of the Integrated Antenna Head Unit (IAHU), detailing the individual components and their assembly. It visually represents the arrangement of the titanium baseplate, spacers, loop antenna, hybrid biconical antenna, and GPS & S-band antenna, along with the composite radome. The exploded view helps in understanding the construction and integration of the various elements within the IAHU.

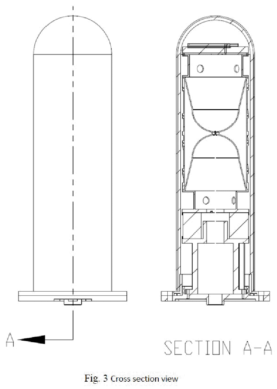

**FIG. 3****:** This figure presents a sectional view of the Integrated Antenna Head Unit (IAHU), offering insight into the internal configuration and alignment of the components. It illustrates the positioning of the loop antenna, hybrid biconical antenna, and GPS & S-band antenna within the composite radome, emphasizing the strategic layout that minimizes interference and optimizes performance.

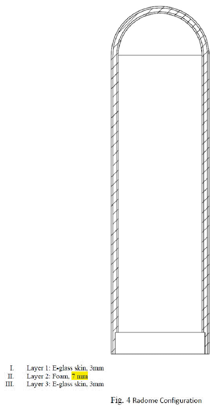

**FIG. 4****:** This figure depicts a detailed view of the composite radome used in the Integrated Antenna Head Unit (IAHU). It highlights the radome's design, which ensures electrical transparency and structural integrity, protecting the antennas from environmental factors such as water pressure and temperature variations.

The figure underscores the radome's role in maintaining consistent performance in underwater conditions.

Persons skilled in the art will appreciate that elements in the figures are illustrated for simplicity and clarity and may not have been drawn to scale. For example, the dimensions of some of the elements in the figure may be exaggerated relative to other elements to help to improve understanding of various exemplary embodiments of the present disclosure.

### DETAILED DESCRIPTION OF THE INVENTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

All terms (including technical and scientific terms) used herein have the same meaning as commonly understood by one of ordinary skill in the art to which various embodiments belong. Further, the meaning of terms or words used in the specification and the claims should not be limited to the literal or commonly employed sense but should be construed in accordance with the spirit of the disclosure to most properly describe the present disclosure.

The terminology used herein is for the purpose of describing particular various embodiments only and is not intended to be limiting of various embodiments. As used herein, the singular forms "a," "an" and "the" are intended to include the plural forms as well, unless the context clearly indicates otherwise. It will be further understood that the terms "comprises" and/or "comprising" used herein specify the presence of stated features, integers, steps, operations, members, components, and/or groups thereof, but do not preclude the presence or addition of one or more other features, integers, steps, operations, members, components, and/or groups thereof.

The present disclosure will now be described more fully with reference to the accompanying drawings, in which various embodiments of the present disclosure are shown.

The present invention relates to an Integrated Antenna Head Unit (IAHU) designed to enhance communication and navigation capabilities for underwater mobile platforms, such as submarines. This innovative unit consolidates multiple antenna systems into a single, compact structure, addressing the challenges of space, weight, and interference commonly associated with traditional systems.

### Embodiments of the Invention:

1. **Integrated Antenna Head Unit (IAHU):**
   ∘ **Constructional Features:**
      ▪ The IAHU comprises a titanium baseplate (1) that provides structural support for the entire assembly. Mounted on this baseplate are various antennas, each optimized for specific frequency bands.
      ▪ A loop antenna (3) is mounted on a first spacer (2), designed to operate at very low frequency (VLF), High Frequency (HF) and Very High Frequency (VHF) for tactical communication.
      ▪ A hybrid biconical antenna assembly, including a cylindrical support (5) and a second spacer (4), supports VHF, L-band, and Ultra High Frequency (UHF) communication.
      ▪ A GPS and S-band antenna (7) is mounted on a third spacer (6), facilitating satellite communication and navigation systems, including GPS, GLONASS, and IRNSS and GSAT-7.
      ▪ The entire assembly is enclosed within a composite radome, which ensures electrical transparency and structural integrity, protecting the antennas from environmental factors.
   ∘ **Functional Interrelations:**
      • The antennas strategically arranged to minimize intra-band interference, with an antenna-in-antenna layout that simplifies cable routing and enhances performance.
      ▪ The composite radome not only protects the antennas but also ensures that signals can be transmitted and received without significant attenuation.
2. **Submarine Communication and Navigation System:**
   ∘ **System Integration:**
      ▪ The IAHU integrated into the submarine's onboard electronics system, interfacing with tactical communication, satellite communication, and navigation modules.
      ▪ The system includes an Automatic Identification System (AIS) receiver for monitoring vessel traffic and a Global Marine Distress and Safety System (GMDSS) for emergency communication.
   ∘ **Functional Capabilities:**
      ▪ The system supports communication across multiple frequency bands, ensuring reliable tactical and satellite communication.
      ▪ Navigation capabilities are enhanced through the integration of global navigation satellite systems, providing accurate positioning data.
3. **Method for Facilitating Communication and Navigation:**
   o **Operational Steps:**
      ▪ The method involves transmitting and receiving tactical communication signals using the loop and hybrid biconical antennas, and satellite communication signals using the GPS and S-band antenna.
      ▪ Navigation signals are received from GPS, GLONASS, IRNSS and GSAT-7 providing accurate positioning data.
      ▪ The AIS receiver monitors vessel traffic, while the GMDSS facilitates emergency communication.
   ∘ **Best Mode of Working:**
      ▪ The IAHU is designed to operate autonomously, with minimal input required from the operator. It automatically switches between communication modes based on signal strength and environmental conditions.
      ▪ The system is optimized for energy efficiency, with a power management unit that ensures minimal energy consumption.

### Detailed Description of the Figure:

FIG. 1 provides a detailed side view of the Integrated Antenna Head Unit (IAHU) designed for submarine communication and navigation systems. This figure illustrates the structural components and their arrangement within the unit, highlighting the compact and efficient design that enables the integration of multiple antenna systems into a single assembly. The components are labelled with reference numerals for clarity:
**1: Titanium Baseplate** - The baseplate serves as the foundational support for the entire antenna assembly. It is constructed from titanium to provide strength and durability while minimizing weight, which is crucial for submarine applications.
**2: Spacer-I (Loop)** - This spacer is positioned above the titanium baseplate and provides the necessary mounting support for the loop antenna. It ensures that the loop antenna is securely positioned and optimally aligned for effective operation.
**3: Loop Antenna** - The loop antenna is configured to operate at Very Low Frequency (VLF), High Frequency (HF) and Very High Frequency (VHF) bands. It is designed to facilitate tactical communication over a minimum distance of 5 kilometers, ensuring reliable signal transmission and reception.
**4: Spacer-II (Mounting Support for Biconical & Loop)** - This spacer provides structural support and alignment for both the biconical and loop antennas. It ensures that the antennas are properly spaced to minimize intra-band interference and optimize performance.
**5: Hybrid Biconical Antenna-** A cylindrical Support is used to assemble the hybrid biconical antenna, which operates across VHF, L-band, and ultra high frequency (UHF) bands. The cylindrical support is designed to maintain the antenna's alignment and stability during operation.
**6: Spacer-III (GPS & Biconical Mounting Support)** - This spacer ensures proper alignment and spacing for the GPS and S-band antenna. It plays a critical role in maintaining the structural integrity of the antenna assembly and preventing interference between the different antenna systems.
**7: GPS** & **S Band Antenna** - The GPS and S-band antenna is responsible for facilitating satellite communication and navigation. It supports systems such as GPS, GLONASS, and IRNSS, providing accurate positioning data and reliable communication with satellites.

The entire assembly is enclosed within a composite radome (not explicitly labelled in the figure), which is designed to ensure electrical transparency and structural integrity. The radome protects the antennas from environmental factors such as water pressure and temperature variations, ensuring consistent performance in underwater conditions.

Overall, FIG. 1 illustrates the innovative design and integration of the IAHU, showcasing how multiple antenna systems are efficiently packaged within a single unit to enhance communication and navigation capabilities for underwater mobile platforms.

**FIG. 2****:** This figure provides an exploded view of the Integrated Antenna Head Unit (IAHU), detailing the individual components and their assembly:
- **1: Titanium Baseplate** - The baseplate is the foundational element, supporting the entire assembly.
- **2: Spacer-I (Loop)** - This spacer mounts the loop antenna securely.
- **3: Loop Antenna** - Positioned on Spacer-I, it operates across VLF, HF, and VHF bands.
- **4: Spacer-II (Mounting Support for Biconical & Loop)** - Provides alignment for the loop and biconical antennas.
- **5: Hybrid Biconical Antenna** - Assembled with a cylindrical support, it operates across VHF, L-band, and UHF bands.
- **6: Spacer-III (GPS & Biconical Mounting Support)** - Ensures alignment for the GPS and S-band antenna.
- **7: GPS** & **S Band Antenna** - Positioned on Spacer-III, it supports satellite communication and navigation.

The exploded view visually represents the arrangement and integration of these components within the IAHU, along with the composite radome that encloses the assembly.

**FIG. 3****:** This figure presents a sectional view of the Integrated Antenna Head Unit (IAHU), offering insight into the internal configuration and alignment of the components:
- **1: Titanium Baseplate** - Provides structural support for the assembly.
- **2: Spacer-I (Loop)** - Supports the loop antenna.
- **3: Loop Antenna** - Operates across VLF, HF, and VHF bands.
- **4: Spacer-II (Mounting Support for Biconical & Loop)** - Aligns the loop and biconical antennas.
- **5: Hybrid Biconical Antenna** - Operates across VHF, L-band, and UHF bands.
- **6: Spacer-III (GPS & Biconical Mounting Support)** - Aligns the GPS and S-band antenna.
- **7: GPS** & **S Band Antenna** - Supports satellite communication and navigation.

The sectional view emphasizes the strategic layout that minimizes interference and optimizes performance, enclosed within the composite radome.

FIG. 4: This figure depicts a detailed view of the composite radome used in the Integrated Antenna Head Unit (IAHU):
- The radome is designed to ensure electrical transparency and structural integrity, protecting the antennas from environmental factors such as water pressure and temperature variations. It plays a crucial role in maintaining consistent performance in underwater conditions, ensuring that signals can be transmitted and received without significant attenuation.

Overall, these figures collectively illustrate the innovative design and integration of the IAHU, showcasing how multiple antenna systems are efficiently packaged within a single unit to enhance communication and navigation capabilities for underwater mobile platforms.

### Best Mode of Working the Invention:

The best mode of working the invention involves deploying the IAHU on a submarine, where it seamlessly integrates with existing systems to provide comprehensive communication and navigation capabilities. The unit's compact design and efficient layout ensure that it occupies minimal space while delivering maximum performance. The composite radome protects the antennas from harsh environmental conditions, ensuring reliable operation in underwater environments. The system's ability to monitor vessel traffic and facilitate emergency communication further enhances its utility, making it an invaluable asset for modern underwater operations.

### Advantages of the Invention:

**1. Compact Design:**
   ∘ The integrated antenna head unit (IAHU) consolidates multiple antenna systems into a single, compact structure, significantly reducing the physical footprint and weight. This is particularly advantageous for submarines, where space and weight are critical constraints.
2. **Minimized Interference:**
   ∘ The novel antenna-in-antenna layout and strategic cable routing minimize intra-band interference, ensuring optimal performance across various frequency bands. This design enhances the reliability and efficiency of communication and navigation systems.
3. **Enhanced Structural Integrity:**
   o The use of a composite radome provides robust protection for the antennas, ensuring electrical transparency and structural integrity. This feature allows the IAHU to withstand harsh submarine environments, including high hydrostatic pressure and temperature variations.
4. **Versatile Communication Capabilities:**
   o The IAHU supports a wide range of communication frequencies, including VLF, HF, VHF, UHF, L-band, and S-band. This versatility enables reliable tactical and satellite communication, meeting diverse operational needs.
5. **Integrated Navigation Systems:**
   o The inclusion of GPS, GLONASS, IRNSS and GSAT-7 capabilities within the IAHU provides accurate and reliable navigation data, enhancing the situational awareness and operational effectiveness of underwater platforms.
6. **Safety and Monitoring Features:**
   ∘ The integration of an Automatic Identification System (AIS) receiver and a Global Marine Distress and Safety System (GMDSS) enhances safety by enabling vessel traffic monitoring and emergency communication.
7. **Energy Efficiency:**
   ∘ The IAHU is designed to optimize energy consumption, reducing the overall power requirements of the submarine's communication and navigation systems. This efficiency is crucial for extended missions and operations.
8. **Ease of Integration:**
   ∘ The IAHU can be easily integrated into existing submarine platforms without requiring significant modifications. This ease of integration reduces installation time and costs, making it a practical solution for modernizing underwater communication and navigation systems.
9. **Autonomous Operation:**
   o The system is capable of operating autonomously, with minimal input required from the operator. It can automatically switch between communication modes based on signal strength and environmental conditions, ensuring seamless operation.
10. **Improved Reliability and Performance:**
   ∘ By consolidating multiple systems into a single unit and minimizing their interactions, the IAHU improves the overall reliability and performance of submarine communication and navigation systems, making it an invaluable asset for underwater operations.

The descriptions and illustrations provided in this document are intended to explain the principles of the invention and its best mode of working. They are not intended to limit the scope of the invention, which is defined by the claims. Variations and modifications to the described embodiments may be made without departing from the scope of the invention. The specific embodiments described in this document are examples of the invention and are not intended to limit the scope of the claims. The claims should be interpreted broadly to cover all equivalent structures and methods that fall within the scope of the invention. The technical specifications and details provided in this document are for illustrative purposes only. Actual implementations of the invention may vary based on specific design requirements, manufacturing processes, and application needs.

Any references to prior art documents, patents, or publications are provided for informational purposes only. The inclusion of such references does not imply that the present invention is limited by or dependent on the prior art. Further the scope of the present invention, which pertains to an Integrated Antenna Head Unit (IAHU) for underwater mobile platforms, can encompass several variations and enhancements that maintain the core functionality while adapting to different operational needs or technological advancements. The IAHU could incorporate different types of antennas, such as patch antennas or phased array antennas, to further optimize performance across specific frequency bands or to enhance directional capabilities. The composite radome could be constructed using advanced materials such as graphene composites or nanomaterials to improve electrical transparency, reduce weight, and enhance durability against environmental factors. The IAHU could be designed as a modular system, allowing for easy upgrades or replacements of individual antenna components or subsystems without requiring a complete overhaul of the unit. Further the unit could be integrated with additional sensors or systems, such as sonar or environmental monitoring devices, to provide comprehensive situational awareness and data collection capabilities. The IAHU could include energy harvesting technologies, such as solar panels or thermoelectric generators, to supplement power requirements and enhance energy efficiency during extended missions. The unit could support wireless communication interfaces, such as Bluetooth or Wi-Fi, for seamless integration with other onboard systems or external devices, facilitating data exchange and remote control. Implementing adaptive frequency management systems that automatically adjust operational frequencies based on environmental conditions or mission requirements to optimize performance. These possibilities demonstrate the flexibility and adaptability of the present invention, allowing it to evolve and meet the diverse needs of modern underwater operations while maintaining its core objectives of efficient communication and navigation.

The following numbered paragraphs are also disclosed:
1. An integrated antenna head unit (IAHU) for a platform onboard electronics system, comprising:
   a. A baseplate (1) providing structural support for the antenna assembly;
   b. A loop antenna (3) mounted on a first spacer (2), configured to operate at Very Low Frequency (VLF), High Frequency (HF) and Very High Frequency (VHF) for tactical communication;
   c. A hybrid biconical antenna assembly, including a cylindrical support (5) and a second spacer (4), configured to support VHF, L-band and Ultra High Frequency (UHF) communication;
   d. A GPS and S-band antenna (7) mounted on a third spacer (6), configured to support satellite communication and navigation systems including GPS, GLONASS, IRNSS and GSAT-7;
   e. A composite radome enclosing the antenna assembly, designed to ensure electrical transparency and structural integrity under submarine conditions;
   wherein the antennas are packaged in a manner that minimizes the submarine footprint while avoiding intra-band interference, and the cable routing for the SATCOM and navigation antennas is simplified by an antenna-in-antenna layout.
2. The integrated antenna head unit of paragraph 1, wherein the loop antenna (3) is miniaturized to reduce the overall size of the unit while maintaining communication capabilities over a minimum distance of 5 kilometers.
3. The integrated antenna head unit of paragraph 1, wherein the hybrid biconical antenna assembly is configured to optimize performance by adjusting the spacing between the VHF, L-band, and UHF elements to minimize intra-band interference.
4. The integrated antenna head unit of paragraph 1, wherein the GPS and S-band antenna (7) is configured to transmit and receive signals for GSAT-7 satellite communication.
5. The integrated antenna head unit of paragraph 1, wherein the composite radome is constructed using a sandwich configuration of composite materials to enhance electrical transparency and structural integrity and safety.
6. The integrated antenna head unit of paragraph 1, further comprising an Automatic Identification System (AIS) receiver integrated within the unit to monitor vessel traffic.
7. The integrated antenna head unit of paragraph 1, further comprising a Global Marine Distress and Safety System (GMDSS) for emergency signal communication at sea.
8. The integrated antenna head unit of paragraph 1, wherein the antenna-in-antenna layout on a single printed circuit board (PCB) supports the integration of multiple communication and navigation systems.
9. The integrated antenna head unit of paragraph 1, wherein the baseplate (1) is designed with titanium material to withstand the stress and environmental conditions encountered in submarine operations.
10. The integrated antenna head unit of paragraph 1, wherein the first spacer (2) is configured to provide optimal mounting support for the loop antenna (3) to ensure stable operation.
11. The integrated antenna head unit of paragraph 1, wherein the second spacer (4) is configured to provide mounting support for both the biconical and loop antennas, ensuring proper alignment and spacing.
12. The integrated antenna head unit of paragraph 1, wherein the third spacer (6) is configured to provide mounting support for the GPS and S-band antenna (7), ensuring proper alignment and spacing.
13. The integrated antenna head unit of paragraph 1, wherein the unit is designed to operate across multiple frequency bands, including L1, L2, L5 and S-Band, for enhanced navigation capabilities.
14. The integrated antenna head unit of paragraph 1, wherein the cable routing within the unit is optimized to reduce signal loss, electromagnetic field distortion and improve overall communication efficiency.
15. The integrated antenna head unit of paragraph 1, wherein the unit configured for easy integration into existing submarine platforms without requiring significant modifications.
16. The integrated antenna head unit of paragraph 1, wherein the radome is treated with a coating to enhance its resistance to environmental factors such as saltwater corrosion and UV radiation.
17. A submarine communication and navigation system, comprising:
   a. An integrated antenna head unit (IAHU) as claimed in paragraph 1, configured to facilitate communication and navigation for an underwater mobile platform;
   b. A tactical communication module operatively connected to the IAHU, configured to transmit and receive signals across Very Low Frequency (VLF), High Frequency (HF), Very High Frequency (VHF), Ultra High Frequency (UHF) and L-band frequencies;
   c. A satellite communication module operatively connected to the IAHU, configured to transmit and receive signals for S-band mobile satellite services, including both transmission (TX) and reception (RX) for GSAT-7;
   d. A navigation module operatively connected to the IAHU, configured to receive signals from global navigation satellite systems, including GPS, GLONASS, and IRNSS, across L1, L2, and L5 bands;
   e. An Automatic Identification System (AIS) receiver operatively connected to the IAHU, configured to monitor vessel traffic;
   f. A Global Marine Distress and Safety System (GMDSS) operatively connected to the IAHU, configured to facilitate emergency signal communication at sea;
   wherein the IAHU is enclosed within a composite radome designed to ensure electrical transparency and structural integrity, and the system is configured to minimize the submarine footprint while maintaining optimal performance across all communication and navigation functions.
18. A method for facilitating communication and navigation for an underwater mobile platform, comprising:
   a. Providing an integrated antenna head unit (IAHU) as described in paragraph 1, configured to support multiple communication and navigation systems;
   b. Transmitting and receiving tactical communication signals using the loop antenna (3) and hybrid biconical antenna assembly, across Very Low Frequency (VLF), High Frequency (HF), Very High Frequency (VHF), Ultra High Frequency (UHF) and L-band frequencies;
   c. Transmitting and receiving satellite communication signals using the GPS and S-band antenna (7), for S-band mobile satellite services, including both transmission (TX) and reception (RX) for GSAT-7;
   d. Receiving navigation signals from global navigation satellite systems, including GPS, GLONASS, and IRNSS, across L1, L2, and L5 bands, using the GPS and S-band antenna (7);
   e. Monitoring vessel traffic using an Automatic Identification System (AIS) receiver integrated within the IAHU;
   f. Facilitating emergency signal communication at sea using a Global Marine Distress and Safety System (GMDSS) integrated within the IAHU;
   wherein the method includes minimizing the submarine footprint while maintaining optimal performance across all communication and navigation functions, and ensuring electrical transparency and structural integrity of the IAHU through the use of a composite radome.
19. The method of paragraph 18, further comprising the step of optimizing the spacing between the loop antenna (3) and the hybrid biconical antenna assembly to minimize inter-band interference during tactical communication.
20. The method of paragraph 18, further comprising the step of adjusting the transmission power of the satellite communication signals based on the distance to the GSAT-7 satellite to ensure efficient communication.
21. The method of paragraph 18, further comprising the step of processing the navigation signals to enhance the accuracy of position data received from GPS, GLONASS, and IRNSS.
22. The method of paragraph 18, further comprising the step of providing real-time updates on vessel traffic to the onboard navigation system using the AIS receiver.
23. The method of paragraph 18, further comprising the step of automatically transmitting distress signals upon detection of emergency conditions using the GMDSS.
24. The method of paragraph 18, further comprising the step of treating the composite radome with a hydrophobic coating to enhance its resistance to water ingress.
25. The method of paragraph 18, further comprising the step of automatically switching between communication modes based on signal strength and environmental conditions.
26. The method of paragraph 18, further comprising the step of optimizing energy consumption across all communication and navigation systems using a power management unit.
27. The method of paragraph 18, further comprising the step of recording communication and navigation data for post-mission analysis using a data logging module.
28. The method of paragraph 18, further comprising the step of providing real-time feedback and control options to the operator through a user interface module.
29. The method of paragraph 18, further comprising the step of performing self-diagnostics to ensure operational integrity and alerting the operator of any malfunctions.
30. The method of paragraph 18, further comprising the step of securing communication data transmitted and received by the IAHU using an encryption module.
31. The method of paragraph 18, further comprising the step of interfacing with external sensors to enhance situational awareness and decision-making.
32. The method of paragraph 18, further comprising the step of operating autonomously with minimal input required from the operator during standard operations.
33. The method of paragraph 18, further comprising the step of integrating the IAHU with existing submarine platforms without requiring significant modifications.

## Claims

1. An integrated antenna head unit (IAHU) for a platform onboard electronics system, comprising:
a. A baseplate (1) providing structural support for the antenna assembly;
b. A loop antenna (3) mounted on a first spacer (2), configured to operate at Very Low Frequency (VLF), High Frequency (HF) and Very High Frequency (VHF) for tactical communication;
c. A hybrid biconical antenna assembly, including a cylindrical support (5) and a second spacer (4), configured to support VHF, L-band and Ultra High Frequency (UHF) communication;
d. A GPS and S-band antenna (7) mounted on a third spacer (6), configured to support satellite communication and navigation systems including GPS, GLONASS, IRNSS and GSAT-7 (both transmission (TX) and reception (RX));
e. A composite radome enclosing the antenna assembly, designed to ensure ultra-wideband electrical transparency and structural integrity under submarine conditions;
wherein the antennas are packaged in a manner that minimizes the submarine footprint while avoiding intra-band interference, and the cable routing for the SATCOM and navigation antennas is simplified by an antenna-in-antenna layout.

2. The integrated antenna head unit of claim 1, wherein the hybrid biconical antenna assembly is configured to optimize performance by adjusting the spacing between the VHF, L-band, and UHF elements to minimize intra-band interference.

3. The integrated antenna head unit of claim 1, wherein the GPS and S-band antenna (7) is configured to transmit and receive signals for GSAT-7 satellite communication.

4. The integrated antenna head unit of claim 1, wherein the composite radome is constructed using a sandwich configuration of composite materials to enhance ultra-wideband electrical transparency and structural integrity and safety.

5. The integrated antenna head unit of claim 1, further comprising an Automatic Identification System (AIS) receiver integrated within the unit to monitor vessel traffic and a Global Marine Distress and Safety System (GMDSS) for emergency signal communication at sea.

6. The integrated antenna head unit of claim 1, wherein the antenna-in-antenna layout on a single printed circuit board (PCB) supports the integration of multiple communication and navigation systems.

7. The integrated antenna head unit of claim 1, wherein the first spacer (2) is configured to provide optimal mounting support for the loop antenna (3) to ensure stable operation; wherein the second spacer (4) is configured to provide mounting support for both the biconical and loop antennas, ensuring proper alignment and spacing; and wherein the third spacer (6) is configured to provide mounting support for the GPS and S-band antenna (7), ensuring proper alignment and spacing.

8. The integrated antenna head unit of claim 1, wherein the unit is designed to operate across multiple frequency bands, including L1, L2, L5 and S-Band, for enhanced navigation capabilities.

9. The integrated antenna head unit of claim 1, wherein the cable routing within the unit is optimized to reduce signal loss, electromagnetic field distortion and improve overall communication efficiency.

10. The integrated antenna head unit of claim 1, wherein the radome is treated with a coating to enhance its resistance to environmental factors such as saltwater corrosion and UV radiation.

11. A submarine communication and navigation system, comprising:
a. An integrated antenna head unit (IAHU) as claimed in claim 1, configured to facilitate communication and navigation for an underwater mobile platform;
b. A tactical communication module operatively connected to the IAHU, configured to transmit and receive signals across Very Low Frequency (VLF), High Frequency (HF), Very High Frequency (VHF), Ultra High Frequency (UHF) and L-band frequencies;
c. A satellite communication module operatively connected to the IAHU, configured to transmit and receive signals for S-band mobile satellite services, including both transmission (TX) and reception (RX) for GSAT-7;
d. A navigation module operatively connected to the IAHU, configured to receive signals from global navigation satellite systems, including GPS, GLONASS, and IRNSS, across L1, L2, and L5 bands;
e. An Automatic Identification System (AIS) receiver operatively connected to the IAHU, configured to monitor vessel traffic;
f. A Global Marine Distress and Safety System (GMDSS) operatively connected to the IAHU, configured to facilitate emergency signal communication at sea;
wherein the IAHU is enclosed within a composite radome designed to ensure electrical transparency and structural integrity, and the system is configured to minimize the submarine footprint while maintaining optimal performance across all communication and navigation functions.

12. A method for facilitating communication and navigation for an underwater mobile platform, comprising:
a. Providing an integrated antenna head unit (IAHU) as described in claim 1, configured to support multiple communication and navigation systems;
b. Transmitting and receiving tactical communication signals using the loop antenna (3) and hybrid biconical antenna assembly, across Very Low Frequency (VLF), High Frequency (HF), Very High Frequency (VHF), Ultra High Frequency (UHF) and L-band frequencies;
c. Transmitting and receiving satellite communication signals using the GPS and S-band antenna (7), for S-band mobile satellite services, including both transmission (TX) and reception (RX) for GSAT-7;
d. Receiving navigation signals from global navigation satellite systems, including GPS, GLONASS, and IRNSS, across L1, L2, and L5 bands, using the GPS and S-band antenna (7);
e. Monitoring vessel traffic using an Automatic Identification System (AIS) receiver integrated within the IAHU;
f. Facilitating emergency signal communication at sea using a Global Marine Distress and Safety System (GMDSS) integrated within the IAHU;
wherein the method includes minimizing the submarine footprint while maintaining optimal performance across all communication and navigation functions, and ensuring electrical transparency and structural integrity of the IAHU through the use of a composite radome.

13. The method of claim 12, further comprising the step of optimizing the spacing between the loop antenna (3) and the hybrid biconical antenna assembly to minimize inter-band interference during tactical communication.

14. The method of claim 12, further comprising the step of providing real-time updates on vessel traffic to the onboard navigation system using the AIS receiver.

15. The method of claim 12, further comprising the step of treating the composite radome with a hydrophobic coating to enhance its resistance to water ingress.
